# EUROPEAN PATENT APPLICATION

(11) **EP 3 136 133 A1**
(43) Date of publication of application: **01.03.2017**
(21) Application number: 15461555.3
(22) Date of filing: 25.08.2015
(51) Int. Cl.: G01V 3/16, G01V 3/165

(54) **AN AIRBORNE ELECTROMAGNETIC SURVEY SYSTEM**

(71) Applicant: Przedsiebiorstwo Baden Geofizycznych Sp. z o.o., 03-301 Warszawa (PL); Opegieka Sp. z o.o., 82-300 Elblag (PL); Centrum Badan i Rozwoju Technologii dla Przemyslu S.A., 00-120 Warszawa (PL)
(72) Inventor: Stefaniuk, Michal, 30-071 Krakow (PL); Kret, Anna, 37-450 Stalowa Wola (PL); Cygal, Adam, 34-625 Skrzydlna (PL); Lewinski, Grzegorz, 38-304 Kryg (PL); Krawczyk, Jakub, 82-300 Elblag (PL); Augustynowicz, Adam, 82-300 Elblag (PL); Mazurek, Przemyslaw, 71-075 Szczecin (PL); Gucma, Maciej, 71-042 Szczecin (PL); Putynkowski, Grzegorz, 03-571 Warszawa (PL)
(74) Representative: Eupatent.pl

(57) **Abstract**

An airborne electromagnetic survey system comprising: an antenna assembly (1) configured to induce a primary electromagnetic field and to receive a secondary electromagnetic field resultant from the primary electromagnetic field; a signal generator (3) configured to supply signals to the antenna assembly (1) for inducing the primary electromagnetic field; a controller (4) configured to receive signals from the antenna assembly (1) and to control the operation of the system. The antenna assembly (1) comprises a pair of symmetrical, mutually perpendicular transmitting loop antennas (10) and at least two pairs of symmetrical, mutually perpendicular receiving loop antennas (11, 12, 13). The pairs of the receiving loop antennas (11, 12, 13) are arranged in series with respect to each other and to the pair of the transmitting loop antennas (10), so that the pairs of receiving antennas (11, 12, 13) are each differently distanced from the pair of the transmitting loop antennas (10). The signal generator (3) is further configured to supply signals at different, selectable frequencies to the antenna assembly (1). The system further comprises a compensator module (2) configured to compensate the signal from the primary electromagnetic field induced in each receiving loop antenna (11, 12, 13) for each selected frequency.

## Description

### TECHNICAL FIELD

The present invention relates to an airborne electromagnetic survey system. In particular, the present invention relates to a measuring system for Frequency Domain Electromagnetic Method.

### BACKGROUND

Airborne electromagnetic survey systems are known in the art and are widely used to conduct surveys from the air, pertaining to various properties of the ground, for example to conductivity of the ground. One of the measurement methods utilizing such systems is Frequency Domain Electromagnetic Method. In this method, the system generates a primary electromagnetic field, which in turn induces a secondary electromagnetic field in measured environment, for example in the ground. The surveying system then detects this secondary field and measures its properties, which in turn allows for further deduction of the properties of the ground.

A US patent US6765383B1 discloses an airborne electromagnetic survey system comprising an airborne survey bird, towed behind aircraft, with nose boom on which electric dipoles are arranged for measuring electric fields in specific frequency range.

A PCT patent application WO2009145636A2 discloses a system comprising three first measuring units or sensors, adapted to record a varying electric field strength and a varying magnetic field strength at chosen intervals and thus positions.

The above-mentioned torpedo-shaped antenna assemblies, carried behind airplanes, present decent rigidity and durability. However, their aerodynamic properties are susceptible to strong side winds. Also, such units tend to be costly to manufacture due to specific shape of the housing.

There is a need to provide a system for measuring conductivity (and possibly other parameters) of the ground that would be lightweight and aerodynamically neutral, while maintaining wide range of measurement possibilities and relatively low production cost.

These and other objects of the invention presented herein are accomplished by providing an airborne electromagnetic survey system.

### SUMMARY

There is presented an airborne electromagnetic survey system comprising: an antenna assembly configured to induce a primary electromagnetic field and to receive a secondary electromagnetic field resultant from the primary electromagnetic field; a signal generator configured to supply signals to the antenna assembly for inducing the primary electromagnetic field; a controller configured to receive signals from the antenna assembly and to control the operation of the system; wherein: the antenna assembly comprises a pair of symmetrical, mutually perpendicular transmitting loop antennas and at least two pairs of symmetrical, mutually perpendicular receiving loop antennas; wherein the pairs of the receiving loop antennas are arranged in series with respect to each other and to the pair of the transmitting loop antennas, so that the pairs of receiving antennas are each differently distanced from the pair of the transmitting loop antennas; wherein the signal generator is further configured to supply signals at different, selectable frequencies to the antenna assembly; and wherein the system further comprises a compensator module configured to compensate the signal from the primary electromagnetic field induced in each receiving loop antenna for each selected frequency.

Preferably, each pair of the loop antennas comprises a first loop antenna arranged in a first plane and a second loop antenna arranged in a second plane B, the first plane A being perpendicular with respect to the second plane B, so that inner areas defined by loops of the loop antennas intersect with each other in pairs along their axes of symmetry which are collinear with the intersection of the first plane A and the second plane B; and wherein all the pairs are arranged next to each other so that the first loop antennas are co-planar to each other and the second loop antennas are co-planar to each other.

Preferably, all pairs of the receiving loop antennas are located on the same side of the pair of the loop transmitting antennas.

Preferably, either the first loop antennas or the second loop antennas are arranged in parallel to the ground.

Preferably, each receiving loop antenna is connected with a corresponding transmitting loop antenna via a separate compensating block of the compensating module, wherein each compensating block corresponds to a different, selectable frequency.

Preferably, the compensation module comprises additional transmitting antennas positioned with respect to the receiving loop antennas and configured to induce an additional electromagnetic field compensating the signal from primary magnetic field acting on each receiving antenna.

### BRIEF DESCRIPTION OF DRAWINGS

Further details and features of the present invention, its nature and various advantages will become more apparent from the following detailed description of the preferred embodiments shown in a drawing, in which:
Fig. 1 presents a diagram of the system according to the present invention;
Fig. 2 presents an antenna assembly;
Fig. 3 presents a diagram of a controller;
Fig. 4 shows a diagram of a signal generator;
Fig. 5 shows a diagram of a first example of a compensator;
Fig. 6 shows a diagram of a second example of a compensator;
Fig. 7 shows a diagram of a compensator block.

### DETAILED DESCRIPTION

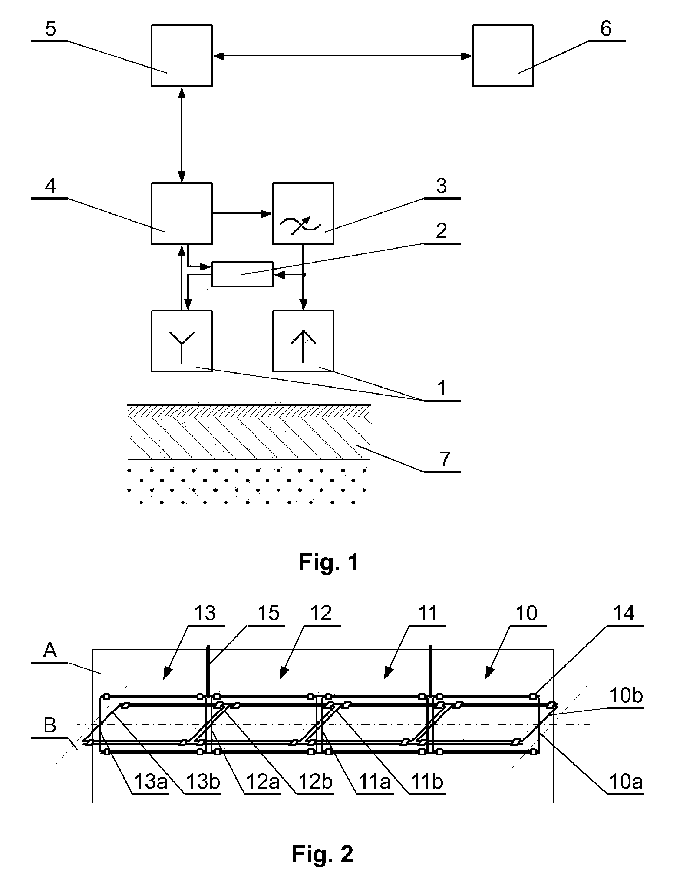

Fig. 1 presents a diagram of a system according to present invention. The system operates above ground 7, while being attached to an aircraft. Preferably, the system is attached to a drone. The system comprises an antenna assembly 1 with transmitting and receiving antennas, a compensator module 2 and a signal generator 3. It further comprises a controller 4 configured to register and process the signals and to communicate with aircraft's transponder 5, which supplies information and measurement results in real time, wirelessly, to a remote station 6. The remote station 6 is adapted to monitor and control the operation of the survey system. In case of an unmanned aircraft (i.e. a drone) carrying the survey system, the remote station 6 can be adapted to control the aircraft as well. The communication between the transponder 5 and the station 6 is bi-directional and wireless, for example using radio waves. The controller 4 provides frequency and amplitude settings to the signal generator 3.

Fig. 2 presents an antenna assembly. The antenna assembly comprises two transmitting antennas 10a, 10b, which are loop antennas, orientated perpendicularly with respect to each other and located in the axis of the whole antenna assembly. Further, the antenna assembly comprises six receiving antennas 11 a, 11 b, 12a, 12b, 13a, 13b, being loop antennas, arranged in pairs 11, 12, 13, where they orientated perpendicularly with respect to each other and located in the axis of the whole antenna assembly. The antennas are connected by longitudinal rods using mechanical connectors 14. The antenna assembly 1 is suspended from the aircraft using lines 15.

In a particular detailed example embodiment, the antenna assembly 1 comprises a pair of symmetrical, mutually perpendicular transmitting loop antennas 10 and at least two pairs of symmetrical, mutually perpendicular receiving loop antennas 11, 12, 13. Each pair 10, 11, 12, 13 of loop antennas comprises a first loop antenna 10a, 11 a, 12a, 13a arranged in a first plane A and a second loop antenna 10b, 11 b, 12b, 13b arranged in a second plane B. In other words, the inner area defined by an electrical conductor (wire, tube) constituting the effective structure of the first loop antenna 10a, 11 a, 12a, 13a is coplanar with a first plane A and the inner area defined by an electrical conductor (wire, tube) constituting the effective structure of the second loop antennas 10b, 11 b, 12b, 13b is coplanar with a second plane B.

The first plane A is perpendicular with respect to the second plane B, so that inner areas defined by loops of the loop antennas 10a, 10b, 11 a, 11 b, 12a, 12b, 13a, 13b intersect with each other in pairs along their axes of symmetry, which axes in turn are collinear with the intersection of the first plane A and the second plane B. All the pairs 10, 11, 12, 13 are arranged next to each other, so that the first loop antennas 10a, 11 a, 12a, 13a are co-planar to each other and the second loop antennas 10b, 11 b, 12b, 13b are co-planar to each other. The pairs of receiving loop antennas 11, 12, 13 are arranged in series with respect to each other and to the pair of transmitting loop antennas 10, so that the pairs of receiving antennas 11, 12, 13 are each differently distanced from the pair of transmitting loop antennas 10. Different distance of each pair of receiving loop antennas to the pair of transmitting loop antennas allows for taking measurements at different depths of the ground at given moment with given signal from the generator. Additionally, differentiating the frequency and the antennas V/H between measurements will allow to achieve different penetration especially in sub-surface region.

Preferably, the shape of used loop antennas is rectangular. Other symmetrical shapes however are also possible, i.e. circular, square, triangular, star-like etc. It is worth noting that the size of the antenna influences spatial resolution - for bigger antenna the results are more averaged for bigger area than for smaller antenna.

The transmitting antennas 10a, 10b are controlled in the following manner. Only one of the antennas within a pair works at given time (they are controlled alternately so that only one antenna of the pair is active). One antenna produces a field with a vector perpendicular to the earth's surface (10b) and the other antenna produces a field with a vector parallel to the earth's surface (10a). The emission power of the antennas is regulated by the signal generator 3. The setting of the power is done remotely from the remote station 6. The power is set so as to allow the system to work with a maximum possible power, which is preferable due to better parameters of the separation between the signal and noise (SNR), while taking into account the time of flight of the system, due to limitations of the built-in battery system.

The antenna assembly 1 receives six signals. Three measured signals are for horizontal waves and three measured signals are for vertical waves. The emission from antenna 10b enables measurement of signals 10b-11b, 10b-12b, 10b-13b for three consecutive horizontal antennas 11 b, 12b, 13b and enables a measurement of signals 10b-11a, 10b-12a, 10b-13a for three consecutive vertical antennas 11 a, 12a, 13a. The emission from antenna 10a enables a measurement of signals 10a-11a, 10a-12a, 10a-13a for three consecutive vertical antennas 11 a, 12a, 13a and enables a measurement of signals 10a-11b, 10a-12b, 10a-13b for three consecutive horizontal antennas 11 b, 12b, 13b.

During measurement, the system obtains 24 combined results, wherein for each pair of transmitting and receiving antennas there is obtained an information about conductivity and magnetic susceptibility for one operational frequency.

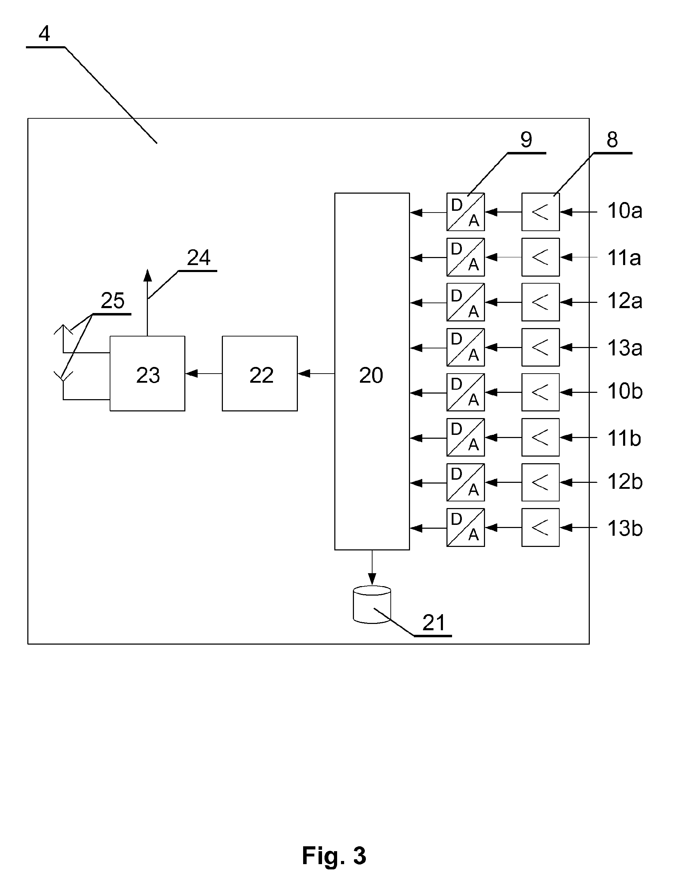

Fig. 3 presents a schematic diagram of the controller 4. The measurement chain of the controller 4 comprises six amplifiers 8 and six analog-to-digital converters 9 connected to particular receiving antennas 11 a, 12a, 13a, 11 b, 12b, 13b as shown in the Fig.3. In order to measure conductivity and magnetic susceptibility, there are also measured voltages on the transmitting antennas 10a, 10b, through additional lines, also comprising the amplifier 8 and the analog-to-digital converter 9. The terminals of the measurement chains are connected to a common concentrator 20. Data from measurement chains is stored in a nonvolatile memory 21. The signals are processed by a digital signal processing module 22. The results of the processing are transmitted by a communication module 23, using antennas 25, to the aircraft's transponder 5. Control instructions from remote station 6 are transmitted through drone's transponder 5 and received by communication module 23, also using antennas 25. Further, these control instructions (e.g. desired signal parameters) are transmitted to the signal generator 3 using the connection 24. Gathered measurement signals, stored in the non-volatile memory 21, are available after landing of the drone to an operator of the remote station 6 and used for archiving and further analysis.

The system can operate at different frequencies, wherein higher frequencies are used preferably for surface measurements, and lower frequencies are used preferably for measurements of parameters of the sub-surface sections of the ground.

The system according to the invention conducts measurements at a constant distance from the earth's surface. In case of change in the distance, an altimeter is used to measure the distance in order to correct the measurement.

The measurement data gathered from a particular region or place allows to provide, based on a sectional model of the ground/soil, conductivity in particular layers, which further allows to measure the degree of moisture in these layers.

The system according to the invention, with deactivated transmitting antennas, allows to measure the electromagnetic background. This can be done in order to determine a frequency or a frequency range, which should not be used during measurements, for example due to interferences. In particular, such noise can originate from electrical grids or electrical devices. Determination of noise level for given frequency, for which there are no interferences, allows to determine measurement possibilities - separation of the signal with respect to the noise. This process is preferably conducted before and after measurements.

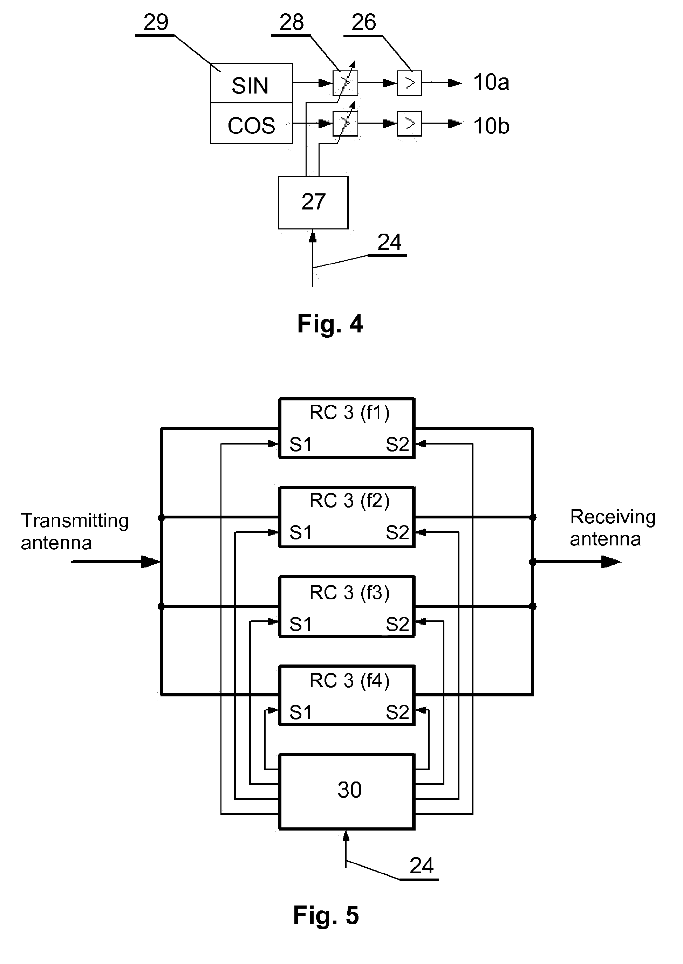

Fig. 4 shows a diagram of the signal generator 3. The signal from the transmitting antennas 10a, 10b is a sinusoidal signal, which is generated in the signal generator 3. The signal generator 3 comprises a quadrature digital frequency synthesizer 29, power amplifiers 28 and a controller 27, for example a microprocessor-based control circuit. The synthesizer 29 generates two sinusoidal signals transmitted through separate paths, which signals are shifted in phase by 90 degrees. The amplitude of each of signal can be regulated using preamplifiers 28. The controller 27 receives settings (frequency, e. g. f1, f2, f3, f4, and amplitudes for both paths) from the communication module 23 via the connection 24. Because the signal is generated only by one of the transmitting antennas (10a or 10b), the amplification of the preamplifier 28 for the other transmitting antenna is set to zero. The synthesizer 29 comprises two digital-to-analog converters for both quadrature channels respectively (SIN and COS). Settings supplied to frequency synthesizer determine frequency and amplitude of the signal. The amplitude is determined using a remote station 6, and the frequencies are changed periodically. The choice of frequencies and their operating times (emission time length) are transmitted from remote station 6, wherein the choice of time lengths depends on the noise level. Increasing the measurement time causes the measurement speed to decrease, which translates to longer flight. The remote station 6 allows to adjust these parameters to particular measurement constrains. During noise measurement, the amplification of the preamplifiers 28 is set to 0.

The measurement chain, after amplifying the signal, converts the signal from analog to digital in converter 9. In order to obtain a synchronized measurement for all the paths, the converters 9 are controlled by a common clock signal from a generator that highly stable and preferably invariant to time and temperature. The signals registered by converters are processed in the processing module 22 and stored in the memory 21. The processing module 22 can conduct spectral analysis. During the measurement of the background signal the spectral analysis is performed on the whole range of frequencies, and the results are transmitted to the remote station 6. During normal functioning of the system, only those frequencies are analyzed, which are generated by the signal generator 3. For the spectral analysis there is used a discrete Fourier transform with a window function adapted for particular frequency. The choice of the window function is made by the remote station 6.

The electromagnetic field induced by transmitting antennas 10a, 10b causes induction of variable currents in the ground from primary field, which currents cause induction of secondary fields received by receiving antennas. The secondary field is significantly weaker than the primary field. In fact, the receiving antenna receives two fields: a strong primary field and a weak secondary field. Lowering the amplitude of the signal from the primary field in the receiving antenna is necessary to enable operation with a maximum dynamic range of the analog-to-digital converter 9. Thus, there is provided a switchable passive compensator 2, which receives and transfers part of the signal from transmitting antenna 10a, 10b to the receiving antenna 11 a, 12a, 13a, 11 b, 12b, 13b, in order to reduce the signal from the primary field in the receiving antenna to zero (i.e. to compensate it).

Fig. 5 presents a first example of a compensator module 2. The compensator 2 performs compensation of signals for six combinations of antenna working pairs: 10a-11a, 10a-12a, 10a-13a, 10b-11b, 10b-12b, 10b-13b. Each of these combinations requires connecting a particular transmitting antenna with a corresponding receiving antenna through a compensating block RC3. The compensator module 2 comprises a compensating unit for each working pair of the transmitting antenna and receiving antenna, as shown in Fig. 5. Each compensating unit comprises a separate compensating block RC3 for each selectable frequency (e.g. f1, f2, f3, f4), each block being configured to be activated or deactivated according to selected frequency.

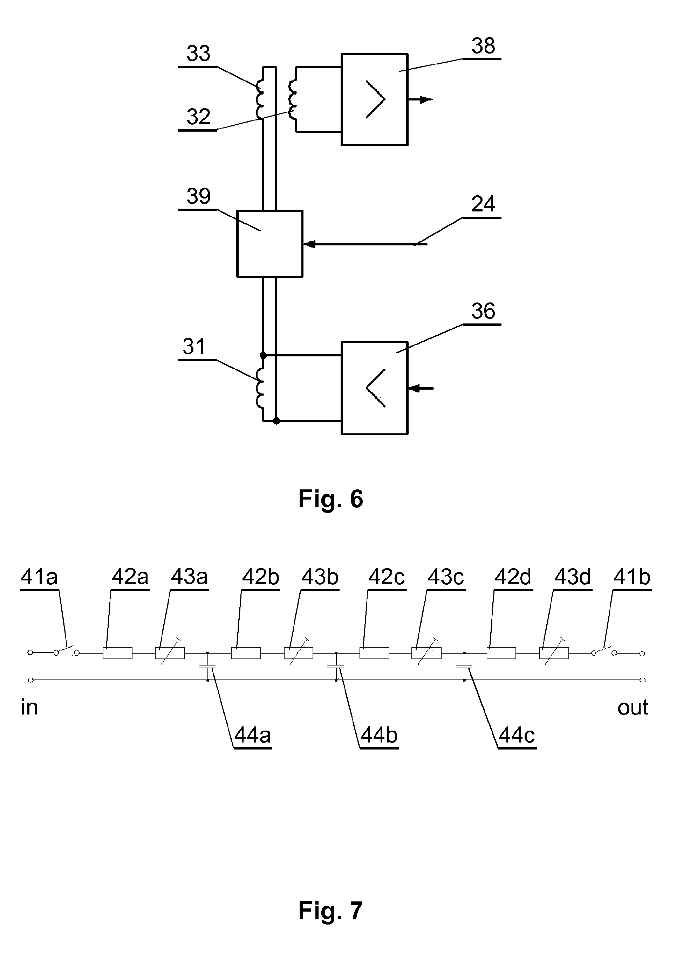

The compensating block RC3 performs the function of a circuit presented in Fig. 7, which is adjusted using potentiometers 43a, 43b, 43c, 43d in order to obtain a signal in the receiving antenna of a phase opposite and of an amplitude equal with respect to the signal from the primary field induced in the receiving antenna. The compensator block is connected in series with the receiving antenna and in parallel with the transmitting antenna. The system with the compensator uses up to four selected, different frequencies (f1, f2, f3, f4), for which it is necessary to adjust the compensating blocks RC3. Because the adjustment is performed separately for each frequency, and the circuit is passive, it is necessary to switch the RC circuits in accordance with chosen operating frequency, which is performed using switches S1, S2 controlled by controller 30. The choice of the compensating block RC3 is performed using communication line 24 with information about current frequency sent from communication module 23.

The second example of the compensator module 2 cooperating with the amplifying module utilizes a coupling through magnetic field, as shown in Fig. 6. Sinusoidal signal from the signal generator 3 of a set frequency and amplitude is transmitted, after amplification by an amplifier 36, to the transmitting antenna 10a or 10b, inducing a primary field. The primary field causes induction of a secondary field in the ground, which is received by receiving antennas 11 a, 12a, 13a or 11 b, 12b, 13b, respectively, and then amplified by an amplifier 38 corresponding to this antenna (amplifier 38 corresponds to amplifier 8 from Fig. 3). Next, the signal is provided to the analog-to-digital converter 9 as in Fig. 3. As discussed above, the receiving antenna receives not only the secondary field from the ground, but also the signal of the primary field. In this compensating module, a compensator with inductive coupling is used. The part of the signal that powers the transmitting antenna 10a, 10b is supplied to a processing block 39 (wherein change of the frequency is effected using line 24). In the vicinity of each receiving antenna 32 (i.e. one of the receiving antennas 11 a, 12a, 13a, 11 b, 12b, 13b) there is located its own additional transmitting antenna 33. The processing block 39 lowers the amplitude and changes the phase so that the additional transmitting antenna 33 of the compensator causes induction of an additional, compensating field in the vicinity of given receiving antenna 32. Thus, the resultant field caused by the direct influence of the transmitting antenna 31 (being in practice one of the transmitting antennas 10a, 10b) on the receiving antenna 11 a, 12a, 13a or 11b, 12b, 13b, respectively, is equal or close to zero. Consequently, the receiving antenna registers the signal of the secondary field, and the receiving amplifier 38 and the analog-to-digital converter 9 do not saturate. The set of receiving antennas from this embodiment comprises the compensating antennas 33 and the receiving antennas 32 (which are the receiving antenna 11 a, 12a, 13a or 11b, 12b, 13b) located in a close physical vicinity in order to produce strong magnetic coupling.

The structure of the antenna assembly comprises pairs of mechanically-connected transmitting and receiving antennas. This results in a rigid and light structure. Also, when compared to known designs, such as the torpedo, this structure poses less resistance to side winds, and is less costly to manufacture. Such antenna assembly is advantageous during measurements taken at low speed - known torpedo design requires higher speed to remain stable if it is not heavy enough. Also, this construction reduces the influence of the wind on the measured signal (so called "microphone effect").

The antenna assembly of the system according to the invention allows for easy scalability, by adding additional pairs of receiving loop antennas. This allows easy adjustment of the system in order to measure at depths according to specific requirements.

## Claims

1. An airborne electromagnetic survey system comprising:
- an antenna assembly (1) configured to induce a primary electromagnetic field and to receive a secondary electromagnetic field resultant from the primary electromagnetic field;
- a signal generator (3) configured to supply signals to the antenna assembly (1) for inducing the primary electromagnetic field;
- a controller (4) configured to receive signals from the antenna assembly (1) and to control the operation of the system;
**characterised in that**:
- the antenna assembly (1) comprises a pair of symmetrical, mutually perpendicular transmitting loop antennas (10) and at least two pairs of symmetrical, mutually perpendicular receiving loop antennas (11, 12, 13);
- wherein the pairs of the receiving loop antennas (11, 12, 13) are arranged in series with respect to each other and to the pair of the transmitting loop antennas (10), so that the pairs of receiving antennas (11, 12, 13) are each differently distanced from the pair of the transmitting loop antennas (10);
- wherein the signal generator (3) is further configured to supply signals at different, selectable frequencies to the antenna assembly (1); and
- wherein the system further comprises a compensator module (2) configured to compensate the signal from the primary electromagnetic field induced in each receiving loop antenna (11, 12, 13) for each selected frequency.

2. The system according to claim 1, wherein each pair (10, 11, 12, 13) of the loop antennas comprises a first loop antenna (10a, 11 a, 12a, 13a) arranged in a first plane (A) and a second loop antenna (10b, 11 b, 12b, 13b) arranged in a second plane (B), the first plane (A) being perpendicular with respect to the second plane (B), so that inner areas defined by loops of the loop antennas (10a, 10b, 11 a, 11b, 12a, 12b, 13a, 13b) intersect with each other in pairs (10, 11, 12, 13) along their axes of symmetry which are collinear with the intersection of the first plane (A) and the second plane (B); and wherein all the pairs (10, 11, 12, 13) are arranged next to each other so that the first loop antennas (10a, 11 a, 12a, 13a) are co-planar to each other and the second loop antennas (10b, 11 b, 12b, 13b) are co-planar to each other.

3. The system according to any preceding claim, wherein all pairs of the receiving loop antennas (11, 12, 13) are located on the same side of the pair of the loop transmitting antennas (10).

4. The system according to any preceding claim, wherein either the first loop antennas (10a, 11 a, 12a, 13a) or the second loop antennas (10b, 11b, 12b, 13b) are arranged in parallel to the ground.

5. The system according to any preceding claim, wherein each receiving loop antenna (11a, 11b, 12a, 12b, 13a, 13b) is connected with a corresponding transmitting loop antenna (10a, 10b) via a separate compensating block (RC3) of the compensating module (2), wherein each compensating block (RC3) corresponds to a different, selectable frequency (f1, f2, f3, f4).

6. The system according to any of claims 1 to 4, wherein the compensation module (2) comprises additional transmitting antennas (33) positioned with respect to the receiving loop antennas (11 a, 12a, 13a, 11 b, 12b, 13b) and configured to induce an additional electromagnetic field compensating the signal from primary magnetic field acting on each receiving antenna (11 a, 12a, 13a, 11 b, 12b, 13b).
